# EUROPÄISCHE PATENTANMELDUNG

(11) **EP 1 729 190 A2**
(43) Veröffentlichungstag der Anmeldung: **06.12.2006**
(21) Anmeldenummer: 06010462.7
(22) Anmeldetag: 20.05.2006
(51) Int. Cl.: G05B 19/042

(54) **Vorrichtung und Verfahren zum Prüfen, Parametrieren und Flashen von ECU-gesteuerten Fahrzeugkomponenten**

(30) Priorität: 30.05.2005 DE 102005025068
(71) Anmelder: Dürr Somac GmbH, 09366 Stollberg (DE)
(72) Erfinder: Achatz, Thomas, 09434 Hohndorf (DE); Lohße, Axel, 08396 Waldenburg (DE)
(74) Vertreter: Findeisen Hübner Neumann Seerig

(57) **Zusammenfassung**

Die Erfindung betrifft eine Vorrichtung zum Prüfen, Parametrieren und Flashen von ECUgesteuerten Fahrzeugkomponenten, insbesondere für Prozessstationen in Produktionsbereichen zur Automobilherstellung. Es wird die Aufgabe gelöst, eine in einem Diagnosedevice integrierbare Vorrichtung so auszugestalten, dass für Anwendungen an Prozessstationen in Produktionsbereichen eine einfache Handhabung sowie eine exakte Zuordnung der Prüftechnik auch dann gewährleistet ist, wenn die Vorrichtung schlecht zugänglich ist oder durch Karosserieteile teilweise verdeckt ist und wenn übergeordnete Serversysteme teilweise oder generell nicht zur Verfügung stehen. Dies wird erreicht, indem der Diagnosedevice (1) und die zugeordnete(n) Prozessstation(en) jeweils mehrere Infrarotmodule (3) aufweisen, die miteinander in Wirkverbindung stehen und die derart angeordnet sind, dass mit den Infrarotmodulen (3) des Diagnosedevices (1) eine Abstrahlung möglichst flächendeckend in alle Richtungen erzielt wird, während mit den Infrarotmodulen (3) der Prozessstation eine gerichtete Abstrahlung auf die Seitenfläche des sich in der jeweiligen Prozessstation befindlichen Fahrzeuges erzielt wird. Weiterhin wird ein Verfahren zur Anwendung einer solchen Vorrichtung beschrieben.

## Beschreibung

Die Erfindung betrifft eine Vorrichtung zum Prüfen, Parametrieren und Flashen von ECU-gesteuerten Fahrzeugkomponenten gemäß dem Oberbegriff des ersten Patentanspruchs, wobei eine solche Vorrichtung nachfolgend auch als "mobiles Diagnosedevice" bezeichnet wird. Weiterhin betrifft die Erfindung ein Verfahren zur Anwendung einer diesbezüglichen Vorrichtung.

Kraftfahrzeuge müssen verschiedenartige Anforderungen bezüglich funktioneller, sicherheitstechnischer, umweltrelevanter und komfortbedingter Aspekte erfüllen. Hierfür sind moderne Kraftfahrzeuge teilweise mit mehr als 50 elektronischen Steuergeräten ausgestattet, die ein weitgehend optimales Zusammenwirken der zahlreichen Teilsysteme bewirken sollen. Für den Informationsaustausch zwischen diesen Steuergeräten und den zugeordneten Baugruppen sind zahlreiche technische Lösungen verfügbar, die sowohl im eigentlichen Fahrbetrieb als auch bei der Herstellung des Kraftfahrzeuges eingesetzt werden. Im Bereich der Fahrzeugherstellung erfolgt der Zugriff auf ECU-gesteuerte Baugruppen meist über den zentralen Diagnosezugang, oft aber auch im direkten Kontakt zum erforderlichen Steuergerät sowie gegebenenfalls unter Nutzung einer Fremdstromversorgung, sofern das Fahrzeugbordnetz noch nicht soweit installiert ist, dass die notwendige Funktion von diesem ausführbar ist.

Speziell bei der Fahrzeugmontage und Wartung sind für die genannten Arbeitsumfänge bereits verschiedenartige Vorrichtungen bekannt. Allerdings ergeben sich oftmals Probleme bezüglich der Handhabung und einer sicheren Integration in die einzelnen Produktionsteilprozesse. Deshalb werden an mobile Diagnoseadapter aufgrund ihrer Einsatzbedingungen sehr spezielle Anforderungen gestellt:
- sie müssen durch den Werker bzw. Prüfer gut betätigbar sein
- die Gestaltung muss ein Stecken trotz fortgeschrittener Fahrzeugverbauung ermöglichen
- eine sichere Kontaktgabe mit hoher Steckzahl muss gewährleistet werden
- der materielle Wert des Diagnoseadapters muss erkennbar sein, ein entsprechendes Handling muss daraus abgeleitet werden können
- der Diagnoseadapter muss sich temporär in bestehende Prozessstationen integrieren lassen
- der Diagnoseadapter muss Prüfabläufe speichern können, um in speziellen Bandbereichen (Steigfahrten, Wendestellen) auch ohne Prozessstation Prüfungen autark durchführen zu können
- der Diagnoseadapter muss die Voraussetzung zum automatisierten Tausch von Prüfabläufen erfüllen
- eine zentrale Pflege muss möglich sein
- ein autarker Betrieb auch ohne Servertechnik muss die temporäre Integration in einen Montage- und Prüfprozess ermöglichen
- die Zuordnung zum Fahrzeug und zu einer Prozessstation im laufenden Linienbetrieb muss möglich sein
- verschiedene Kommunikationsverfahren sowohl zum Fahrzeug als auch zu einer übergeordneten Struktur müssen erfüllt werden
- eine gleichzeitige Kommunikation mit mehreren Steuergeräten muss realisiert werden können
- letztendlich wird eine kompakte Bauform, Miniaturisierung und Gewichtsreduzierung angestrebt.

Eine Vielzahl bekannter Systeme weisen unterschiedliche Einsatzmerkmale auf. So beschreibt DE 102 10 362 A1 ein Diagnosesystem, bei dem mehrere Funktionssysteme eines Kraftfahrzeuges über ein Bus-System miteinander gekoppelt sind. Das Bus-System steht über einen Diagnosestecker mit einem Prüfgerät in Wirkverbindung, wobei dem Diagnosestecker ein Funkmodul, z.B. Bluetooth oder Wireless LAN zugeordnet ist.

WO 02/ 103 316 A2 betrifft ebenfalls ein Diagnosesystem für ein Kraftfahrzeug unter Nutzung eines modifizierten Diagnosesteckers. Ein weiteres System mit Diagnosestecker und Funkmodul ist aus DE 102 00 922 A1 bekannt, wobei hier eine Wirkverbindung mit einem Hostsystem vorgeschlagen wird. Schließlich beschreibt DE 100 26 918 A1 einen Adapter zur Fahrzeugdiagnose, der dem Standardsteckverbinder einer ECU-Vorrichtung zugeordnet wird. Dabei sind im Diagnosestecker die notwendigen elektronischen Bauelemente inklusive der Software baulich integriert.

Die benannten technischen Lösungen sind vorzugsweise für einen Fahrzeugtest in der Entwicklungs- und Testphase, für eine Ferndiagnose während des Einsatzes von Kraftfahrzeugen sowie für eine Fahrzeugdiagnose im Service- und Instandsetzungsbereich geeignet, während eine Anwendung im Fertigungsprozess nicht primär vorgesehen ist.

Die Vorrichtung gemäß DE 103 53 031 A1 zum Prüfen, Parametrieren und Flashen ECUgesteuerter Komponenten in Fahrzeugen oder Fahrzeugbaugruppen weist eine funktionelle Kombination auf, die in einem Diagnosestecker angeordnet ist. Dabei sind im Innenraum vom Steckergehäuse sämtliche für die jeweils zu realisierenden Prüf-, Parametrier- oder Flasharbeiten notwendigen elektronischen Bauelemente inklusive der Software integriert. Ferner wird in dieser Druckschrift u.a. vorgeschlagen, dass die im Diagnosestecker integrierte Vorrichtung mit zwei physikalischen Schnittstellen in Wirkverbindung stehen kann, wobei durch spezielle Software ein multisession-Betrieb zu mehreren Steuergeräten im Fahrzeug gleichzeitig möglich ist. Weiterhin kann die im Diagnosestecker integrierte Vorrichtung sowohl mit dem Fahrzeug als auch mit Hostsystemen in Verbindung stehen. Beispielsweise kann das ein Serversystem, eine Prozessstation oder ein kontinuierlicher zeitlicher Verbindungswechsel zu derartigen Hostsystemen sein. Die Kommunikation mit einem Hostsystem erfolgt über einen Kabelanschluss oder verschiedene Funksysteme. Eine derart in einem Diagnosestecker integrierte Vorrichtung hat sich grundsätzlich bewährt, wobei die Produktionslinie und der Instandsetzungsbereich sowie Servicestationen als die bevorzugte Anwendung zu bewerten sind. Hingegen können sich im Fertigungsprozess Probleme ergeben, sofern die Vorrichtung den genannten Anforderungen nicht gerecht wird.

Aufgabe der Erfindung ist es, eine in einem Diagnosestecker integrierbare Vorrichtung so auszugestalten, dass für Anwendungen an Prozessstationen in Produktionsbereichen eine einfache Handhabung sowie eine exakte Zuordnung der Prüftechnik auch dann gewährleistet ist, wenn die Vorrichtung schlecht zugänglich ist oder durch Karosserieteile teilweise verdeckt ist und wenn übergeordnete Serversysteme teilweise oder generell nicht zur Verfügung stehen.

Die Aufgabe wird gelöst durch eine Vorrichtung mit Merkmalen gemäß Patentanspruch 1 sowie durch ein Verfahren mit Merkmalen gemäß Patentanspruch 13. Vorteilhafte Ausgestaltungen sind Gegenstand der jeweils abhängigen Ansprüche.

Die vorgeschlagene technische Lösung ist vorzugsweise für eine Anwendung in der Produktion an Montagelinien von Automobilherstellern und Automobilzulieferbetrieben konzipiert. Eine Anwendung im späteren Lebenszyklus eines Fahrzeuges im Zusammenhang mit Wartungs- und Instandsetzungsarbeiten oder dergleichen ist zwar primär nicht vorgesehen, jedoch ebenfalls möglich.

Unter Beachtung der jeweils konkreten Produktionsbedingungen wird eine einfache und funktionssichere "Paarung" der Prüftechnik mit dem Fahrzeug sowie eine ständige Verfolgbarkeit und Erreichbarkeit dieser Prüftechnik an Montagelinien ermöglicht. Dabei ist an Prozessstationen in Produktionsbereichen eine einfache Handhabung auch dann gewährleistet, wenn die Vorrichtung schlecht zugänglich oder durch Karosserieteile vollständig verdeckt ist. Neben dem Verfahren zur "Paarung", welches der Zuordnung der im Diagnosedevice integrierten Vorrichtung zu einem konkreten Fahrzeug sowie der Zuordnung dieser Kombination von Vorrichtung und Fahrzeug zu einer Prozessstation dient, sind weiterhin Komponenten für eine prozessspezifische Kommunikation vorgesehen, die noch näher erläutert werden.

Bei einer erfindungsgemäßen Vorrichtung weisen die mobilen Diagnosedevices und die zugeordnete Prozessstation (bzw. auch mehrere solcher Stationen) jeweils Infrarotmodule auf. Diese Infrarotmodule können miteinander in Wirkverbindung gebracht werden. Es versteht sich, dass die Infrarotmodule alternativ für Sende- oder Empfangseigenschaften ausgelegt sind. Hierbei ist der Infrarotmodul des Diagnosedevices so gestaltet, dass eine Abstrahlung möglichst flächendeckend aus dem Fahrzeug heraus erzielt wird. Die Infrarotmodule der Prozessstation sind so angeordnet, dass eine gerichtete Abstrahlung auf die Seitenfläche des sich vor der jeweiligen Prozessstation befindlichen Fahrzeuges erzielt wird. Dabei weisen die Infrarotmodule von Diagnosedevice und Prozessstation vorzugsweise eine hohe steuerbare Leistung auf. Durch eine bezüglich Leistung und Geschwindigkeit optimierte Infrarot-Übertragung wird eine effektive "Paarung" zwischen Vorrichtung und Fahrzeug einerseits sowie Prozessstation andererseits an der laufenden Montagelinie erreicht.

Innerhalb der Infrarotmodule, sowohl angebracht an Prozessstationen als auch integriert in der beschriebenen Vorrichtung (mobiles Diagnosedevice), kommen mehrere Sendedioden in winkeloptimierter Anordnung zum Einsatz. Damit wird gewährleistet, dass im Fahrzeug durch den Infrarotmodul des mobilen Diagnosesystems eine optimale und auch durch Materialien im Fahrzeug reflektierende Infrarotstrahlung nach außen geführt wird. Vom Infrarotmodul an der Prozessstation erfolgt eine ebenso optimierte Ausstrahlung auf die Fläche des Fahrzeuges. Auch die Empfänger sind in beiden Modulen so angeordnet, dass ein optimaler Empfang ermöglicht werden kann. Damit wird zwischen Prozessstation und mobilem Diagnosedevice, platziert auch an abgeschatteten Stellen im Inneren des Fahrzeuges, eine optimale Datenverbindung zum Austausch notwendiger Paarungsparameter erreicht.

Die optimale Position der Sendedioden im Infrarotmodul des mobilen Diagnosedevices wird erreicht, indem an seinen Eckbereichen eine jeweils teilkugelartige Kontur ausgebildet ist, die drei in definierten Winkeln angeordnete Sendedioden aufnimmt. In den vier teilkugelartigen Bereichen des Diagnosedevices ist jeweils eine Infrarot-Schnittstelle angeordnet, die mit mehreren Sendern bestückt ist, die parallel betrieben werden. Damit ist die Funktionsfähigkeit unabhängig von der konkreten Steckrichtung des mobilen Diagnosedevices im Fahrzeug gewährleistet. Die Infrarot-Schnittstellen sind bezüglich ihrer Leistung softwareseitig steuerbar, indem die Sendeleistung unter Beachtung der jeweils konkreten Betriebsbedingungen erhöht oder reduziert werden kann.

Das Gehäuse des Diagnosedevices ist vorteilhaft als Griffstück ausgestaltet. In diesem Griffstück sind sämtliche elektronischen Bauteile einschließlich der Komponenten für die Fahrzeug- und Hostkommunikation untergebracht. Demzufolge wird sowohl eine platzoptimierte Anordnung der Bauteile als auch eine gute Handhabung für den Werker erzielt.

Weiterhin wird vorgeschlagen, dass das Gehäuse des Diagnosedevices aus einem transparenten Material ausgestaltet ist. Somit wird dem Nutzer der "Wert" der Vorrichtung optisch vermittelt, so dass psychologisch bedingt überwiegend eine sorgfältige manuelle Handhabung durch den Werker erfolgen wird.

Am Gehäuse des Diagnosedevices ist ein Kontaktkragen nach Norm "OBD" ausgestaltet. Dieser Kontaktkragen steht mit den im Gehäuse des Diagnosedevices angeordneten elektronischen Baugruppen in Wirkverbindung. Dabei weist der Kontaktkragen federnde Kontakte auf, mit denen eine mechanische Entkopplung zwischen dem Kontaktkragen und den internen elektronischen Baugruppen bewirkbar ist. Somit wird vermieden, dass die intern auf Leiterplatten angeordnete Elektronik durch Übertragung der Kräfte beim Einstecken oder durch ungünstige Toleranzmaße beschädigt wird. Der Kontaktkragen ist beispielsweise mittels einer Schraubverbindung lösbar am Gehäuse des Diagnosedevices befestigt.

Bei Anwendung einer solchen Vorrichtung in Prozessstationen von Produktionsbereichen zur Automobilherstellung wird die Vorrichtung zunächst über eine Steckverbindung mit einer an einem Fahrzeug oder an einer Fahrzeugbaugruppe installierten Diagnosebuchse oder über ein Fremdstromgerät direkt mit einer Elektronikkomponente am Fahrzeug oder der Fahrzeugbaugruppe in Wirkverbindung gebracht. Danach wird durch Anlegen der Fahrzeugspannung oder einer Fremdstromversorgung der mobile Diagnoseadapter aktiviert, wobei er gegebenenfalls Daten zur Fahrzeug- und/oder Baugruppenidentifikation aus dem Steuergerät liest und die Infrarotschnittstellen(n) aktiviert. Nachfolgend durchläuft die Vorrichtung mit dem Fahrzeug oder der Fahrzeugbaugruppe den Produktionsprozess und wartet dabei auf eine Anforderung durch eine Prozessstation.

Anschließend spricht eine Prozessstation über ihre Infrarotschnittstelle das mobile Diagnosedevice im Fahrzeug oder an der Fahrzeugbaugruppe an und empfängt folglich Daten bezüglich der Fahrzeug- und/oder Baugruppenidentifikation. Zusätzlich übermittelt der mobile Diagnoseadapter der Prozessstation via Infrarotverbindung seine Kommunikationsparameter für eine zukünftige Funkverbindung über die Funkverfahren WLAN, DECT oder Bluetooth. Die Prozessstation übermittelt ihre Kommunikationsdaten für das installierte Funkverfahren an den Diagnoseadapter. Damit ist die Infrarotübertragung beendet und der weitere Informationsaustausch für den temporären Bearbeitungsprozess läuft über ein Funkverfahren.

Bei Fahrzeugen oder Baugruppen, bei denen das Auslesen fahrzeug- oder baugruppenspezifischer Informationen möglich ist, kann somit das Eingeben oder Scannen von Informationen, die zum Bearbeitungstyp an der Prozessstation führen, automatisiert werden. Demzufolge wird Werkerzeit eingespart.

Für die prozessspezifische Kommunikation ist eine Hostkommunikation über Funksystem vorgesehen, beispielsweise mittels Bluetooth, DECT oder WLAN. Über diese Verbindungsverfahren ist die Vorrichtung von Servern, Prozessstationen, Servicestationen und Systempflegestationen in einem Netzwerk gezielt erreichbar. Dabei können über diese Verbindung Prüfabläufe aktiviert und gepflegt sowie Statusinformationen und Ergebnisse abgefragt werden. Gleichzeitig können die Prüfabläufe zusätzlich mit fahrzeugspezifischen Flashdaten und Parameterinformationen versehen werden.

Für die Fahrzeugkommunikation werden physikalische Schnittstellen genutzt, z.B. CAN- oder K- LINE. Diese stellen die erforderlichen Verfahren für den Zugriff auf aktuelle Fahrzeugkomponenten entweder direkt oder über eine OBD (on board diagnosis) sicher. Hierbei kann beispielsweise durch die implementierte Software und die Wahl eines leistungsfähigen 32 bit Microcontroller auch eine gleichzeitige Kommunikation mit mehreren Steuergeräten realisiert werden.

Schließlich ist vorgesehen, dass parallel zum Verfahrensablauf an den Prozessstationen die in der Vorrichtung softwareseitig verfügbaren Prüf-, Parametrier- und Flashparameter mittels übergeordneter Systeme gepflegt, aktiviert und nachgeladen werden.

Ein Ausführungsbeispiel ist in der Zeichnung dargestellt. Es zeigen:
- Fig. 1: einen erfindungsgemäßen Diagnosedevice in perspektivischer Ansicht
- Fig. 2: ein Detail eines Diagnosedevices gemäß Fig. 1
- Fig. 3: ein weiteres Detail eines Diagnosedevices gemäß Fig. 1
- Fig. 4: den grundsätzlichen Aufbau eines Diagnosedevices gemäß Fig. 1 mit nochmals zusammengefasster Erklärung der wesentlichen Merkmale
- Fig. 5: ein Blockschaltbild mit Darstellung des grundsätzlichen Verfahrensablaufes bei Anwendung einer erfindungsgemäßen Vorrichtung

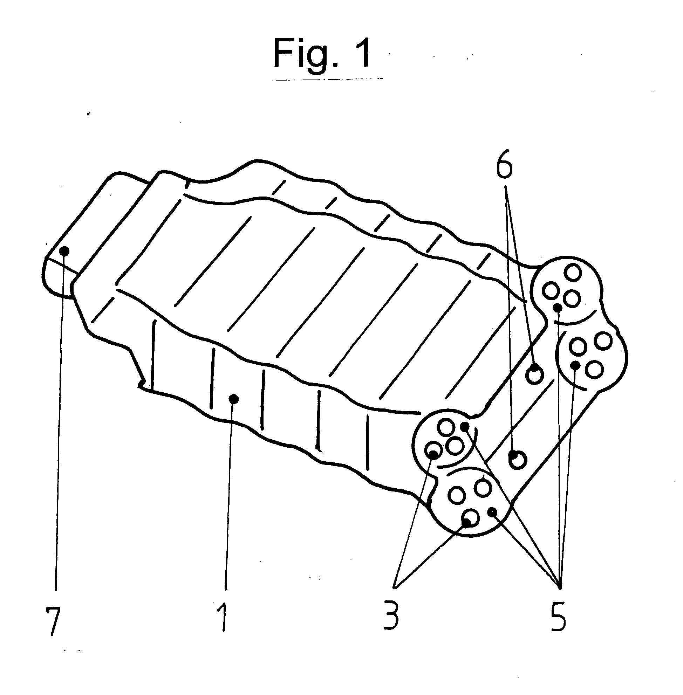

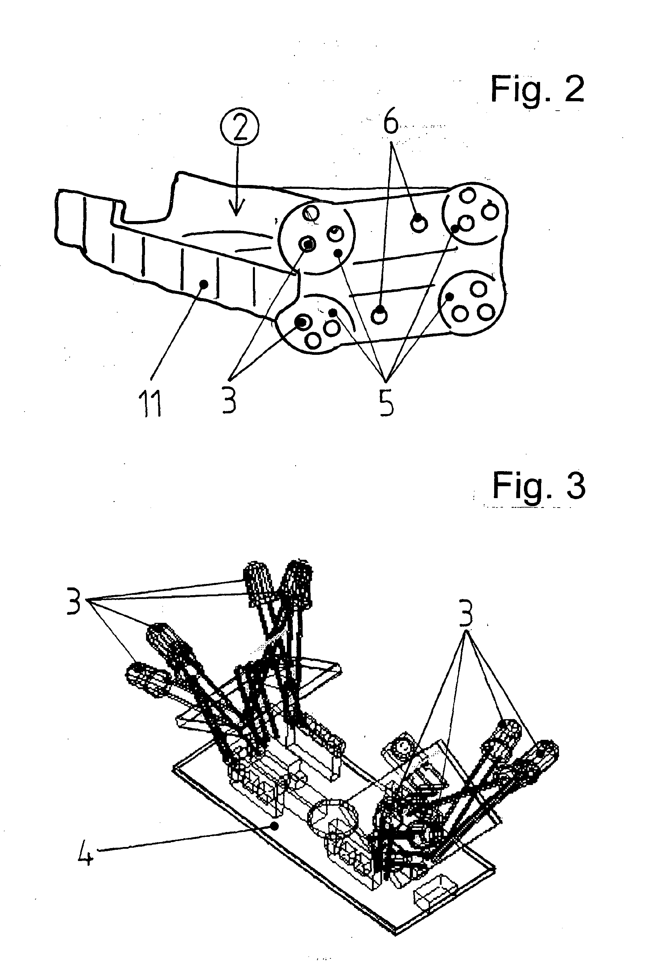

Die in der Zeichnung dargestellte Vorrichtung ist zum Prüfen, Parametrieren und Flashen von ECU-gesteuerten Fahrzeugkomponenten geeignet, wobei die bevorzugte Anwendung der Einsatz für Prozessstationen in Produktionsbereichen zur Automobilherstellung ist. Die Vorrichtung besteht aus einem Diagnosedevice 1, der in Fig. 1 lediglich beispielhaft dargestellt ist. Im Innenraum vom Gehäuse dieses Diagnosedevices 1 sind elektronische Baugruppen für die zu realisierenden Prüf-, Parametrier- und/oder Flasharbeiten sowie die hierfür notwendige Software integriert. Der Diagnosedevice 1 kann beispielsweise aus zwei schalenförmigen Baugruppen zusammengefügt werden, wobei in Fig. 2 beispielhaft eine diesbezügliche "untere" Schale 11 dargestellt ist, in welcher die mit einem Bezugszeichen 2 stilisierten elektronischen Bauteile angeordnet werden können, bevor der Diagnosedevice 1 durch eine in Fig. 2 nicht dargestellte "obere" Schale komplettiert wird.

Im Diagnosedevice 1 sind mehrere Infrarotmodule 3 mit Senderfunktion integriert. Diese sind so angeordnet, dass eine möglichst flächendeckende Abstrahlung in alle Richtungen erzielt wird. In Fig. 3 ist beispielhaft eine Baugruppe 4 dargestellt, auf welcher die Infrarotmodule 3 abgestützt und in unterschiedlicher Richtung orientiert werden können. Eine derart vormontierte Baugruppe 4 wird im Innenraum vom Gehäuse des Diagnosedevices 1 angeordnet. Hierfür weist der Diagnosedevice 1 an den Eckbereichen eine jeweils teilkugelartige Kontur 5 auf, so dass hier jeweils separate Infrarotmodule 3 mit einem definierten Ausstrahlungswinkel platzierbar sind. Außerdem sind im Diagnosedevice 1 zumindest zwei weitere Infrarotmodule 6 mit Empfängerfunktion integriert. Auch diese werden mit einem jeweils definierten Empfangswinkel platziert. Weiterhin ist am Gehäuse des Diagnosedevices 1 ein Kontaktkragen 7 gemäß "OBD" ausgestaltet.

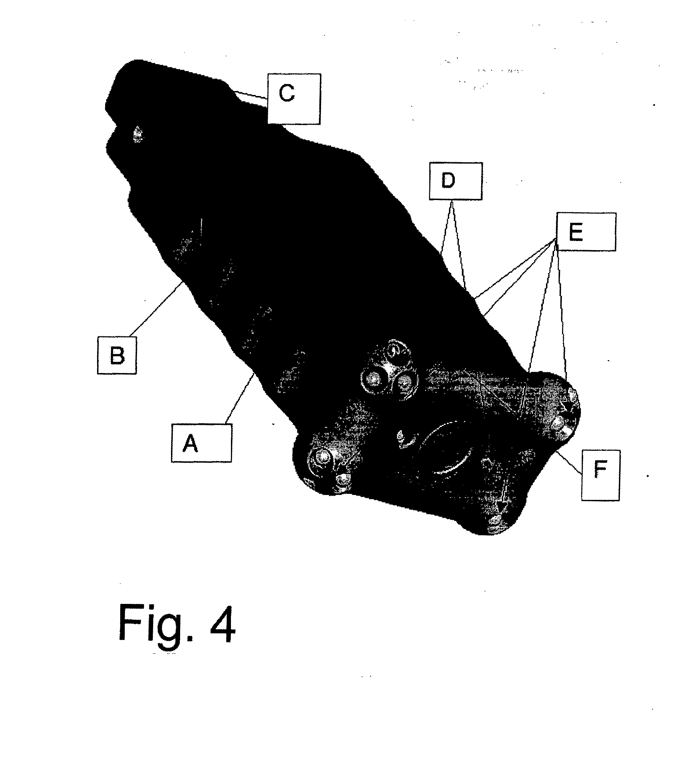

Die erfindungsgemäße Vorrichtung kann weiter ausgestaltet werden, beispielsweise indem das Gehäuse des Diagnosedevices 1 als Griffstück oder aus transparentem Material ausgestaltet wird. Aus Fig. 4 sind nochmals wesentliche Ausgestaltungen ersichtlich, die jeweils mit großen Buchstaben stilisiert sind. Hierbei bezeichnen:
A - im Inneren des Diagnosedevices 1 sind Microcontroller, Fahrzeug-Hostinterface, Speicher, Infrarot-Interface und Funkinterfaces integriert
B - das Gehäuse ist aus transparentem Material gefertigt
C - der OBD-Steckerkragen 7 ist mechanisch entkoppelt und wechselbar, die Kontakte sind einzeln wechselbar
D - zwischen den Infrarot-Sendemodulen 3 sind zwei Infrarot-Empfangsmodule 6 winkeloptimiert angeordnet
E - an den vier Eckbereichen 5 sind vier Infrarot-Sendemodule 3 angeordnet, die mit mehreren Sendedioden bestückt sind, die bezüglich des Ausstrahlungswinkels optimiert eingebracht sind und diese vier Sendemodule arbeiten parallel und sind bezüglich ihrer Leistung softwareseitig steuerbar
F - die gesamte Griffergonomie sichert weitestgehend auch das Stecken an bereits verbauten Umgebungen des Diagnosedevices 1

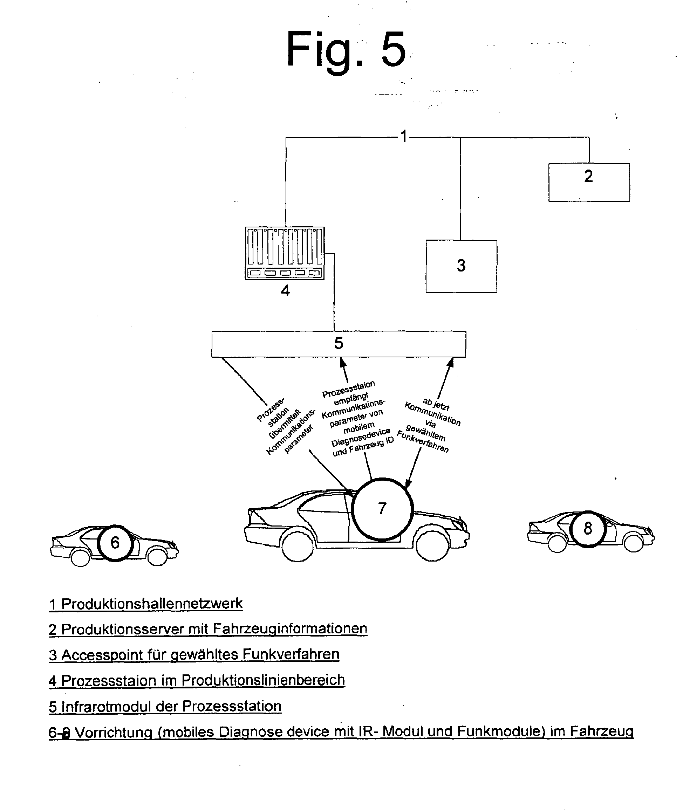

Der Verfahrensablauf bei Anwendung eines solchen Diagnosedevices ist in stilisierter Darstellung als Blockbild nochmals aus Fig. 5 ersichtlich. Um hierbei Wiederholungen zu vermeiden, wird auf die bereits oben erfolgten Darlegungen verwiesen. Zu beachten ist lediglich, dass die in Fig. 5 verwendeten Bezugszeichen 1 bis 8 in dieser Fig. 5 nochmals verbal erklärt sind und folglich nicht mit den entsprechenden Ziffern aus Fig. 1 bis Fig. 3 zu verwechseln sind.

## Patentansprüche

1. Vorrichtung (mobiles Diagnosedevice) zum Prüfen, Parametrieren und Flashen von ECU-gesteuerten Fahrzeugkomponenten, insbesondere für Prozessstationen in Produktionsbereichen zur Automobilherstellung, bestehend aus einem Diagnosedevice mit einer zugeordneten elektronischen Baugruppe, wobei im Steckergehäuse die elektronischen Baugruppen für die zu realisierenden Prüf-, Parametrier- und/oder Flasharbeiten sowie die hierfür notwendige Software integriert sind,
**dadurch gekennzeichnet,**
**dass** das mobile Diagnosedevice (1) und die zugeordnete(n) Prozessstation(en) jeweils Infrarotmodule (3) aufweisen, die miteinander in Wirkverbindung stehen und die derart angeordnet sind, dass mit den Infrarotmodulen (3) des Diagnosedevices (1) eine Abstrahlung möglichst flächendeckend in alle Richtungen erzielt wird, während mit den Infrarotmodulen (3) der Prozessstation eine gerichtete Abstrahlung auf die Seitenfläche des sich in der jeweiligen Prozessstation befindlichen Fahrzeuges erzielt wird.

2. Vorrichtung nach Anspruch 1,
**dadurch gekennzeichnet,**
**dass** die Infrarotmodule (3) von Diagnosedevice (1) und Prozessstation jeweils eine hohe durch Software steuerbare Leistung aufweisen.

3. Vorrichtung nach Anspruch 1,
**dadurch gekennzeichnet,**
**dass** das Gehäuse des Diagnosedevices (1) an den Eckbereichen eine jeweils teilkugelartige Kontur (5) aufweist, wobei im Innenraum dieser Konturabschnitte (5) jeweils ein separates Infrarotmodul (3) mit einem definierten Ausstrahlungswinkel angeordnet ist.

4. Vorrichtung nach Anspruch 3,
**dadurch gekennzeichnet,**
**dass** in den teilkugelartigen Eckbereichen (5) des Diagnosedevices (1) jeweils eine Infrarot-Schnittstelle, bestehend aus einem oder mehreren Sendern, angeordnet ist.

5. Vorrichtung nach Anspruch 4,
**dadurch gekennzeichnet,**
**dass** die Infrarot-Schnittstellen bezüglich ihrer Leistung softwareseitig steuerbar sind.

6. Vorrichtung nach Anspruch 3,
**dadurch gekennzeichnet,**
**dass** zugehörig zu den in den Eckbereichen (5) des Diagnosedevices (1) angeordneten Infrarotsendemodulen (3) zumindest zwei Infrarotempfangsmodule (6) in optimierter Winkellage auf der Fläche zwischen den Infrarotsendemodulen (3) platziert sind.

7. Vorrichtung nach Anspruch 1,
**dadurch gekennzeichnet,**
**dass** das Gehäuse des Diagnosedevices (1) als Griffstück und/oder aus transparentem Material ausgestaltet ist.

8. Vorrichtung nach Anspruch 1,
**dadurch gekennzeichnet,**
**dass** am Gehäuse des Diagnosedevices (1) ein Kontaktkragen (7) gemäß "OBD" ausgestaltet ist.

9. Vorrichtung nach Anspruch 8,
**dadurch gekennzeichnet,**
**dass** der Kontaktkragen (7) mit den im Gehäuse des Diagnosedevices (1) angeordneten elektronischen Baugruppen (2) in Wirkverbindung steht.

10. Vorrichtung nach Anspruch 9,
**dadurch gekennzeichnet,**
**dass** der Kontaktkragen (7) federnde Kontakte aufweist, mit denen eine mechanische Entkopplung zwischen dem Kontaktkragen (7) und den internen elektronischen Baugruppen (2) bewirkbar ist.

11. Vorrichtung nach Anspruch 8,
**dadurch gekennzeichnet,**
**dass** der Kontaktkragen (7) mittels Schraubverbindung lösbar am Gehäuse des Diagnosedevices (1) angeordnet ist.

12. Vorrichtung nach Anspruch 8,
**dadurch gekennzeichnet,**
**dass** die Kontakte, die mit der OBD-Dose des Fahrzeuges in Wirkverbindung stehen, separat wechselbar sind.

13. Verfahren zur Anwendung einer Vorrichtung nach einem der vorhergehenden Ansprüche in Prozessstationen von Produktionsbereichen zur Automobilherstellung, **gekennzeichnet durch** folgende Verfahrensschritte:
- zunächst wird die im Diagnosedevice ausgestaltete Vorrichtung über eine Steckverbindung mit einer an einem Fahrzeug oder an einer Fahrzeugbaugruppe installierten Diagnosebuchse oder über ein Fremdstromgerät direkt mit einer Elektronikkomponente am Fahrzeug oder der Fahrzeugbaugruppe in Wirkverbindung gebracht,
- danach wird die Vorrichtung (mobiles Diagnosedevice) aktiviert, wobei sie gegebenenfalls Daten zur Fahrzeug- und/oder Baugruppenidentifikation aus dem Steuergerät liest und die Infrarotschnittstellen(n) aktiviert,
- nachfolgend durchläuft die Vorrichtung mit dem Fahrzeug oder der Fahrzeugbaugruppe den Bereich der Prozessstation in der Produktionslinie und wartet dabei auf eine Anforderung **durch** die Prozessstation,
- anschließend spricht die Prozessstation über eine Infrarotschnittstelle die Vorrichtung im Fahrzeug oder an der Fahrzeugbaugruppe an und empfängt folglich Daten bezüglich der Fahrzeug- und/oder Baugruppenidentifikation,
- im Anschluss daran erfolgt die beidseitige Übergabe von Kommunikationsparametern für das von jetzt an genutzte Funkverfahren,
- die Übertragung zwischen Prozessstation und mobilem Diagnosedevice ist damit beendet und beide Teilnehmer schalten um auf das ausgewählte Funkverfahren,
- die Paarung des mobilen Diagnosedevices sowie des Fahrzeugs mit der Prozessstation ist damit abgeschlossen,
- danach bildet die Prozessstation aus diesen Daten einen relevanten Bearbeitungstyp und
- die Prozessstation steht im weiteren Verfahrensablauf über eine Hostkommunikation mit der Vorrichtung in Wirkverbindung.

14. Verfahren nach Anspruch 13,
**dadurch gekennzeichnet,**
**dass** für die Hostkommunikation wahlweise die Funksysteme Bluetooth, DECT oder WLAN bestückt und genutzt werden können.

15. Verfahren nach den Ansprüchen 13 und 14,
**dadurch gekennzeichnet,**
**dass** parallel zum Verfahrensablauf an den Prozessstationen die in dem mobilen Diagnosedevice softwareseitig verfügbaren Prüf-, Einstell-, Parametrier- und Flashparameter mittels übergeordneter Systeme gepflegt, aktiviert und nachgeladen werden können.
